# EUROPEAN PATENT SPECIFICATION

(11) **EP 0 618 885 B1**
(45) Date of publication and mention of the grant of the patent: **22.05.1996**
(21) Application number: 93901665.5
(22) Date of filing: 16.12.1992
(51) Int. Cl.: C02F 3/30

(54) **BIOLOGICAL PROCESS FOR REMOVING BOD AND NITROGEN FROM WASTEWATER**
BIOLOGISCHES VERFAHREN ZUR ENTFERNUNG VOM BIOLOGISCHEM SAUERSTOFFBEDARF UND STICKSTOFF AUS ABWASSER
PROCEDE BIOLOGIQUE POUR ELIMINER LA D.B.O. ET L'AZOTE D'EAUX RESIDUAIRES

(30) Priority: 16.12.1991 US 808091
(43) Date of publication of application: 12.10.1994
(73) Proprietor: I. KRÜGER SYSTEMS A/S, DK-2860 Soborg (DK)
(72) Inventor: SPECTOR, Marshall, L., Emmaus, PA 18049 (US)
(74) Representative: Holtzer, Merete Byrch
(86) International application number: PCT/DK92/00381
(87) International publication number: WO 93/12044

(56) References cited:
- DE-C- 2 924 449
- DE-C- 3 427 310
- PATENT ABSTRACTS OF JAPAN, Vol. 8, No. 118, C-226; & JP,A,59 032 999 (EBARA INFILCO K.K.), 22 February 1984 (22.02.84).

## Description

The present invention relates to processes for biologically removing B00 and nitrogen from wastewater by an activated sludge process comprising
(1) aerating a mixture of wastewater and activated sludge in a first zone;
(2) transferring the mixture thus treated to a separation zone in which activated sludge is separated from the treated water;
(3) withdrawing a recycling part of the separated activated sludge for recycling to the first zone transferring the recycling part of the separated activated sludge to a sludge holding zone maintained under non-aeration conditions and holding the activated sludge in the sludge holding zone for a period of time sufficient to effect complete denitrification;
(4) returning the total amount of the activated sludge thus treated to the first zone.

The eutrophication of lakes, rivers and other water resources is receiving worldwide attention. The presence in the environment of nutrients, such as phosphate and nitrogen, is one of the primary causes of eutrophication. These nutrients promote unwanted growth of algae and other aquatic plants.

The eutrophication of our lakes and rivers has led to increased demands for nutrient control in wastewater treatment plants. Governmental agencies have enacted increasingly stringent regulations controlling the amount of nutrients which can be discharged into receiving waters. Since conventional treatment processes remove only small amounts of nitrogen and phosphate, wastewater treatment plants will be required to change or modify their processes to meet these increasingly stringent regulations. Unfortunately, the technology to achieve the required removal efficiencies is lagging behind regulatory requirements.

One approach for accomplishing nutrient removal is biological treatment in a modified activated sludge system without chemical addition. Numerous biological nutrient removal processes have been developed. These biological nutrient removal processes typically use a single sludge configuration in which the organic matter of the influent is used as the carbon and energy source for nitrogen and phosphate removal. This allows for a lower operation cost in comparison to multiple sludge systems and other physical-chemical systems.

In such biological systems, removal of nitrogen from wastewater is conventionally done by first nitrifying (converting ammonia to nitrite and nitrate, NOₓ) and then denitrifying (reducing VOₓ to N₂) the wastewater. The process of nitrification is carried out in an aerobic environment by autotrophic organisms which derive energy for growth by oxidizing ammonia nitrogen values to NOₓ. The energy produced is then utilized to produce protein material from inorganic components in the wastewater, such as H₂O, CO₂ and NH₃. Denitrification is typically carried out in an oxygen-less environment by heterotrophic organisms which utilize NOₓ in the absence of oxygen as an electron acceptor for oxidation of sorbed organic compounds.

One biological nutrient removal process which is commonly used is known as the Bardenpho Process. The Bardenpho Process consists of an initial anaerobic contact zone followed by four alternating stages of anoxic and aerobic conditions. In the anaerobic zone, all of the raw wastewater is mixed with the return sludge. The anaerobic conditions in the initial contact zone are necessary to effect phosphate removal. The first anoxic zone follows the anaerobic zone. Nitrates and nitrites (NOₓ) are supplied to the anoxic zone by recycling nitrified mixed liquor from the following aerobic zone. The organic material in the raw wastewater is used as a carbon source by the denitrifying bacteria in the first anoxic zone to reduce NOₓ to elemental nitrogen or nitrous oxide. The first aerobic (oxic) zone is followed by a second anoxic zone where any remaining NOₓ in the mixed liquor is reduced by the endogenous respiration of the activated sludge. The final stage is aerobic where the mixed liquor is reaerated before reaching the final clarifier. The dissolved oxygen of the wastewater effluent is increased to prevent further denitrification in the clarifier and to prevent the release of phosphates to the liquid in the clarifier.

The Bardenpho Process is capable of achieving a high percentage of nitrogen compound removal as well as phosphate removal. However, the Bardenpho Process requires substantially larger tank volumes than conventional activated sludge systems which means higher capital outlays. Additionally, the Bardenpho System relies on endogenous respiration in the second anoxic reactor which is a relatively slow process. Thus, its use is limited to small plants.

Another biological nutrient removal process which is frequently used is known in the industry as the AO Process. The AO process consists of three treatment zones - anaerobic, anoxic and aerobic. The wastewater and return sludge are mixed in the first treatment zone which is maintained under anaerobic conditions to promote phosphate removal. The anaerobic zone is followed by an anoxic zone. The third treatment zone is an aerobic zone where nutrification of the mixed liquor is achieved. The nitrified mixed liquor is recycled back to the anoxic zone where the nitrate and nitrite are reduced to elemental nitrogen and/or nitrous oxide by denitrifying organisms. The AO system has a high rate of nitrogen removal and requires total tank volume comparable to that of conventional activated sludge systems. Thus, the AO system is a cost effective system for nutrient removal. However, the AO system requires a relatively high mixed liquor recycle rate in order to achieve high nitrogen removal efficiency.

US-A-4488967 describes a process in which a mixture of wastewater and activated sludge is maintained under anaerobic conditions in a first zone before it is transferred to a second zone wherein it is maintained under aerobic conditions by being aerated. The aerated mixture is transferred to a settling zone in which activated sludge is separated from the treated water. Part of the separated activated sludge is transferred to a holding zone in which it is held under non-aeration conditions for a period of time sufficient to reduce any nitrates and/or nitrites contained therein before it is recycled to the first zone and mixed with incoming wastewater.

Further, DE 2924449 describes a method for cleaning waste water by means of an activated sludge process. After treatment of the mixture of waste water and sludge in an aerated first zone, the sludge and a clear supernatent are separated in a clarifyer. At least part of this separated sludge is then transferred to an anoxic denitrification zone where it is held for a time sufficient to essentially complete the denitrification process, whereafter the sludge is recycled to the first zone. In an embodiment of this previous known process, a part of the sludge treated in the anoxic zone can be transferred to an anaerobic phosphate removal zone where the phosphate is released from the microorganisms and the sludge divides into a phosphate rich supernatant which is separated for further treatment and into a phosphate poor sediment which is recycled to the aerated first zone.

Reports of denitrification in the presence of oxygen by different species of bacteria have been published over the last years. However, almost all the work done this far has been in the laboratory with cultures of a few species of bacteria. General explanations of this phenomenon have been suggested, one of which is to the effect that during the metabolism of the bacteria some compounds are produced which inhibit oxidase, i.e. the oxygen respiration.

The object of the invention is to provide a process of the type defined above which is suitable for use in full scale plants and wherein a concurrent biological nitrification and denitrification (CBND) is effected.

The process of the invention is characterized in holding the separated activated sludge in the holding zone maintained under anaerobic conditions for a period of at least 4 hours after complete denitrification of the sludge, so as to select microorganisms capable of converting ammonia present in the mixture into NO_{X} and concurrently reducting the NOₓ so produced into N₂ and/or N₂O in the first zone.

Surprisingly, it has been found that by holding the sludge to be recycled to the first zone for such a prolonged period of time the wastewater will be subjected to both a nitrification and a denitrification when present in said first zone. The mechanism of such concurrent biological nitrificatlon and denitrification is not known, but it is speculated that the prolonged holding of the return sludge in the holding zone promotes a selection of bacteria which in the presence of NO_{X} produce oxidase inhibitors. When present in the first (aerobic) zone the bacteria having their oxygen respiration blocked are forced to use NOₓ as electron acceptor and thus cause denitrification.

Thus, in the process of the invention ammonia nitrogen values in the wastewater are oxidized to NOₓ in the first (aerobic) zone while NOₓ are concurrently reduced to nitrogen and/or nitrous oxides.

Concurrent biological nitrification and denitrification in a single zone greatly reduces capital outlays for plants for the biological removal of BOD and nitrogen from wastewater as well as the operational costs of such plants.

As mentioned above, the return sludge is held in the holding zone for at least 4 hours after complete denitrification of the return sludge. Experiments have shown that a holding time of from 4 to 20 hours ordinarily is sufficient to obtain concurrent biological nitrification and denitrification.

The sludge holding zone is preferably partitioned into two or more distinct sections in order to approximate plug flow in the sludge holding zone and thus to ensure that all parts of the sludge are maintained in the sludge holding zone for a prolonged period of time.

In some cases it may be desirable to stir the return sludge in the holding zone. However, the stirring should be effected in such a manner that the sludge is maintained under anaerobic conditions.

It may also be desirable to adjust the pH of the sludge in the sludge holding zone. Thus, the pH of the sludge in the holding zone should preferably be between 5 and 8.5.

The anaerobically conditioned sludge is mixed with the influent wastewater in the first zone which is preferably aerated to such an extent that the concentration of dissolved oxygen (D.O.) is between 1 and 3 ppm.

If desired in order to obtain a particularly efficient removal of nitrogen, the process of the invention may also comprise a separate treatment in an anoxic zone. Such an anoxic treatment may be effected prior to or subsequent to the treatment in the aerobic zone.

The process of the invention may be modified so as to effect not only nitrogen removal, but also phosphate removal and sludge bulking control.

Thus, in a preferred embodiment of the invention the return sludge from the holding zone is mixed with wastewater in a zone which is maintained under anaerobic conditions before the mixed liquor is introduced into the aerobic zone.

If subjected to such an initial treatment under anaerobic conditions phosphate storing bacteria get preferential access to BOD in the incoming wastewater.

Compared to the well-known Phostrip method this embodiment of the invention presents the advantage that no chemicals have to be added and that the sludge should not be subjected to further treatments before it is mixed with the incoming wastewater. As a result, the process tends to favor selection of these organisms to the disadvantage of other species of organisms. These organisms have been found to effect both phosphate removal and the production of a non-bulking sludge. By holding the sludge in the anaerobic zone for a prolonged period of time this selection is improved.

If desired, in order to obtain a particularly efficient removal of nitrogen, the latter embodiment of the process of the invention may also comprise a separate treatment in an anoxic zone. Such an anoxic treatment may be effected prior to or subsequent to the treatment in the aerobic zone.

The production of non-bulking sludge may be further improved by dividing the anaerobic and/or the aerobic zone into hydraulically distinct sections so as to promote plug flow through these zones.

Preferred embodiments of the present invention is shown in the following detailed description with reference to the drawings, where

Figure 1 is a schematic diagram illustrating one embodiment of the present invention.

Figure 2 is a schematic diagram illustrating an alternative embodiment of the present invention.

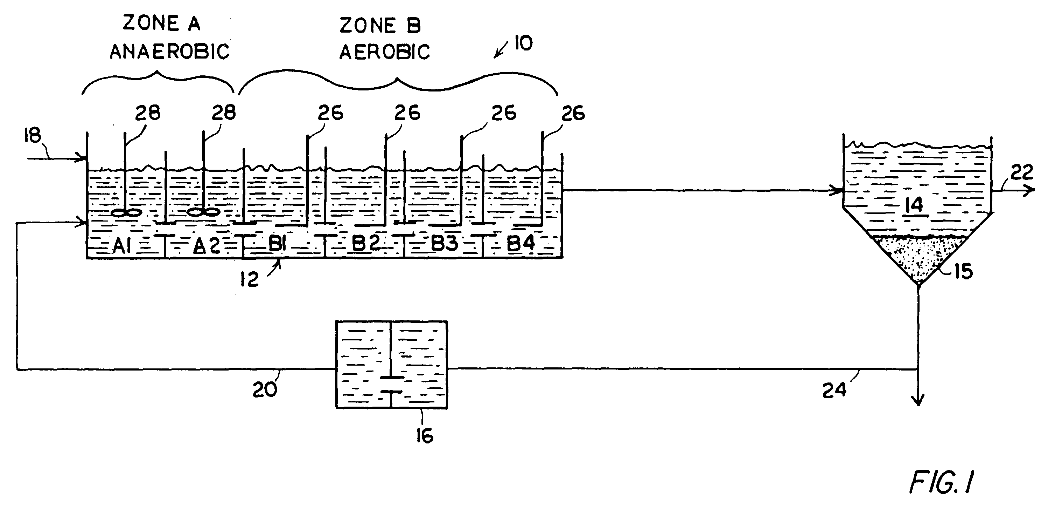

Referring now to the drawings, and particularly to Figure 1, a modified activated sludge wastewater treatment system is shown therein and indicated generally by the numeral 10. The wastewater treatment system includes a secondary treatment zone indicated generally at 12, a final clarifier 14, and a sludge holding tank 16. The secondary treatment zone 12 comprises an anaerobic first stage A followed by an aerobic stage B. The anaerobic stage A and aerobic stage B are preferably partitioned into two or more cells in order to approximate plug flow of liquid. It has been found that by provision of physically partitioned sections of the hydraulic equivalent thereof, there is better assurance of achieving freedom from filamentous growth and selection of a biomass in zone A capable of effecting CBND and better assurance of removal of NOₓ and phosphates in zone B. In the embodiment shown, the anaerobic stage is divided into two distinct cells A1 and A2. The aerobic stage is divided into four distinct cells B1-B4.

Wastewater to be treated enters anaerobic stage A through line 18 where it is mixed with return activated sludge from the sludge holding tank 16 which enters through line 20. Typically, wastewater is settled sewage from a primary sedimentation tank or clarifier (not shown), but primary sedimentation is not necessary. The influent wastewater initially enters cell A1 where it is stirred and admixed with recycled sludge to form a mixed liquor.

After anaerobic treatment, the mixed liquor is transferred to the aerobic zone B where the mixed liquor is aerated. Oxygen-containing gas such as air is admitted into each cell B1-B4 in a manner well-known to those skilled in the art. For example, compressed air may be admitted into each cell (B1-B4) by spargers 26. Alternatively, the secondary treatment area 12 may be provided with mechanical aerators instead of, or in addition to spargers.

In the aerobic zone B, the mixed liquor is aerated under conditions sufficient to oxidize BOD and to convert ammonia (NH₃) present in the wastewater to NOₓ. The NOₓ so produced is concurrently reduced by "aerobic denitrifiers" as will be hereinafter described.

To achieve almost complete nitrification, the sludge age within the system should be about 1.5 days at 30°C and 10 days at 10°C. Sludge age is defined as the weight of MLSS in zone B divided by the weight of MLSS wasted per day. Further, the dissolved oxygen concentration should preferably be maintained between about 1 to 3 ppm, although nitrification may be attained at D.O. levels as low as 0.5 ppm. Lower dissolved oxygen concentrations retard or inhibit ammonia oxidation, while higher D.O. concentrations retard the extent of concurrent biological nitrification and denitrification (CBND) in the secondary treatment area.

After aeration, the mixed liquor passes from the aerobic zone B to a clarifier 14. The sludge in the mixed liquor settles to the bottom of the clarifier 14 thereby forming a clear supernatant in the top of the clarifier 14 and a dense sludge layer 15 in the bottom. The supernatant is discharged either to further treatment or directly to receiving waters through line 22. Activated sludge concentrated in sludge layer 15 on the bottom of the clarifier 14 is transferred to a sludge holding tank 16 through line 24 where the sludge is held in the substantial absence of added oxygen for a prolonged period. A holding period of approximately 4 hours to 20 hours after complete definitrification of the sludge 15. If the sludge is held fewer than 4 hours, the extent of CBND is reduced. If held more than 20 hours, excessive expense is incurred for unnecessary storage capacity. The minimum of 4 hours in the holding tank may be diminished by the nominal sludge residence time in the clarifier, provided that the sludge in the clarifier is free of NOₓ and is not re-exposed to oxygen in transit from the clarifier 14 to the holding tank 16.

In order to prevent sludge from "bypassing" the sludge holding zone, it is preferred that the sludge holding zone is divided by partitions into two or more sections to approximate plug flow conditions. This arrangement will prevent sludge from exiting too quickly and will assure that the sludge is sufficiently conditioned prior to its return to the mainstream.

By holding the sludge for a prolonged period under anaerobic conditions, a biomass is developed which exhibits an oxygen respiration block in the presence of NOₓ. These organisms appear to have developed a survival mechanism that enables them to utilize NOₓ as an electron acceptor, even in the presence of high levels of dissolved oxygen. A possible explanation is that nitrite reduction enzymes in these organisms are activated by the prolonged anaerobic storage period and remain active during several hours of aerobic conditions. When these organisms are returned to the aerobic zone B, where nitrification is being attained, they utilize NOₓ as an electron acceptor to metabolize sorbed BOD. The result is that concurrent biological nitrification and denitrification is achieved in the aerobic zone B, even under air saturation conditions.

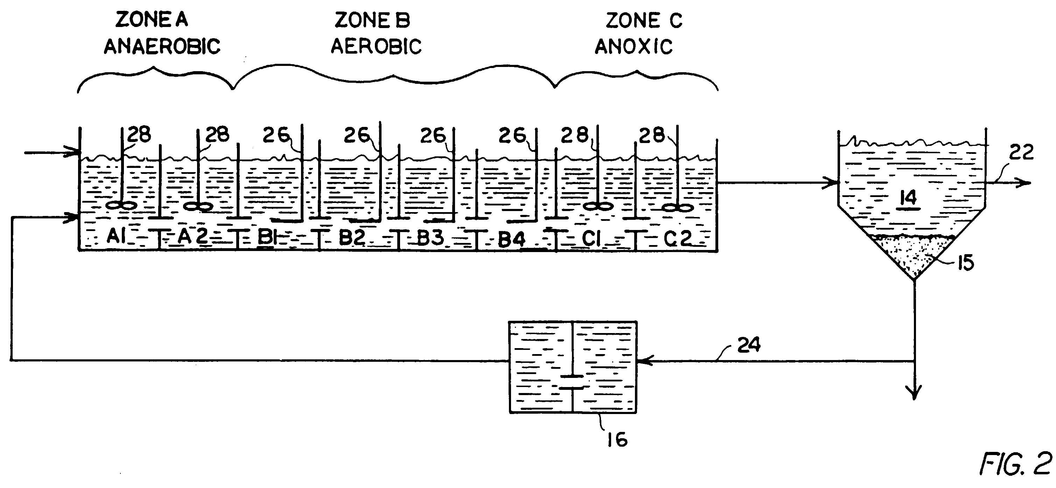

A high degree of nitrogen removal may require a following anoxic denitrification zone, cf. Figure 2 - C1 and C2, or an anoxic zone before the aeration zone with recycling of nitrified mixed liquor. Total retention times for this process are much lower than for the Bardenpho process, and removal efficiencies are much higher than for conventional A/O processes.

Several examples, using the method of the present invention are set out below. These examples are illustrative of the present invention and are not means to be limiting.

### EXAMPLE 1

Two laboratory units were operated as shown in Figure 1 over a period of two weeks. The dissolved oxygen concentration in Unit 1 was maintained at approximately 8 ppm (close to air saturation). The dissolved oxygen concentration in Unit 2 was maintained at approximately 2 ppm. The results are reported in Table 1 below.

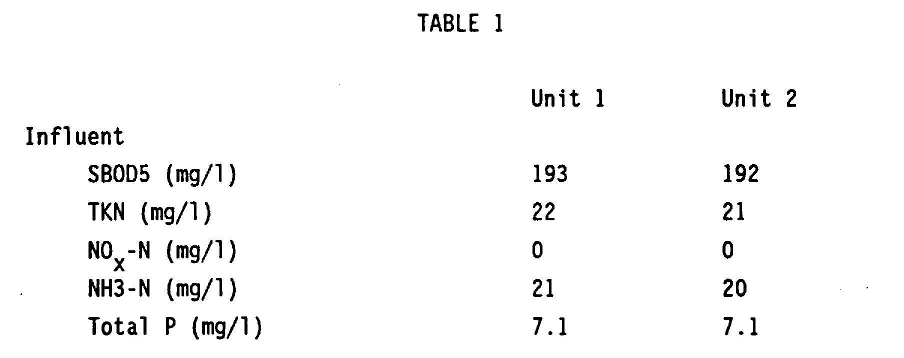

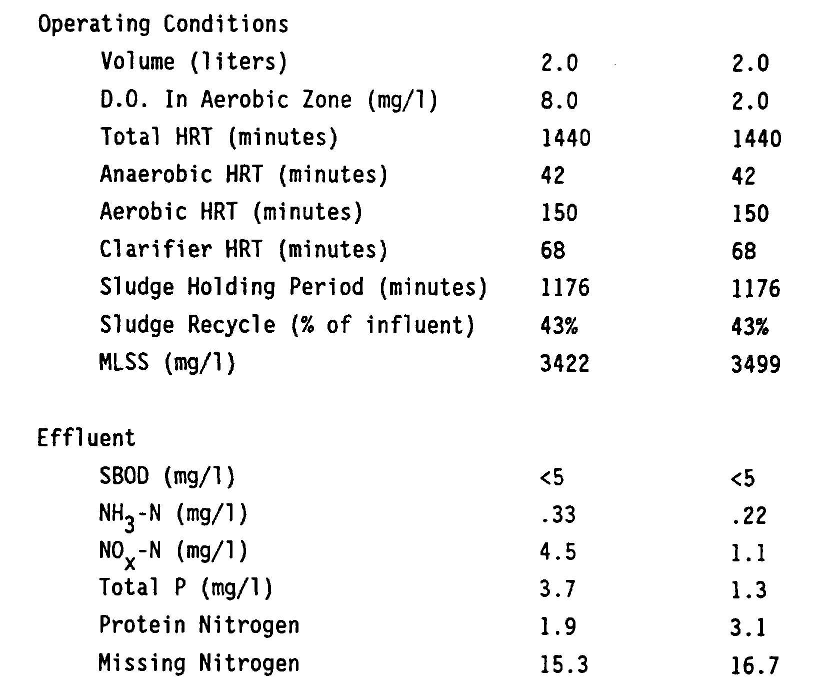

It will be seen from Table 1 that Unit 1 removed approximately 17.2 ppm of nitrogen from the influent. The missing nitrogen in Unit 1, which is believed to be removed by CBND, was 15.3 ppm. Missing nitrogen is the nitrogen removed that cannot be accounted for by protein nitrogen, effluent nitrogen or NOₓ reduced during settling in the clarifier. Unit 2 removed approximately 19.7 ppm of nitrogen, of which 16.7% is considered missing nitrogen removed by CBND. The total phosphate removed was 48% for Unit 1, and 81.6% for Unit 2.

### EXAMPLE 2

A laboratory unit was run in accordance with the conditions of this invention as outlined in Figure 1, except the anaerobic sludge holding was omitted. Average values for two weeks of operation are reported in Table 2.

**TABLE 2**

| Influent | |
|---|---|
| SBOD5 (mg/l) | 96 |
| TKN (mg/l) | 14.0 |
| NOₓ-N (mg/l) | 0 |
| NH3-N (mg/l) | 12.9 |
| Total P (mg/l) | 7.1 |
| | |

| Operating Conditions | |
|---|---|
| Volume (liters) | 2.0 |
| D.O. In Aerobic Zone (mg/l) | 8.0 |
| Total HRT (minutes) | 240 |
| Anaerobic HRT (minutes) | 42 |
| Aerobic HRT (minutes) | 110 |
| Clarifier HRT (minutes) | 68 |
| Sludge Recycle (% of influent) | 43% |
| MLSS (mg/l) | 2819 |
| | |

| Effluent | |
|---|---|
| SBOD (mg/l) | <5 |
| NH₃-N (mg/l) | .39 |
| NOₓ-N (mg/l) | 6.0 |
| Total P (mg/l) | .7 |
| Protein Nitrogen | 4.5 |
| Missing Nitrogen | 3.1 |

In this test, the unit without a prolonged sludge holding zone removed approximately 9.4 ppm of nitrogen. In units 1 and 2 of Example 1, total nitrogen removed was 17.2 ppm and 19.7 ppm respectively. The missing nitrogen (which is removed by CBND) was only 3.0, compared to 17.2 and 16.7 in Units 1 and 2 of Example 1. This illustrates the effectiveness of prolonged sludge holding in promoting CBND.

### EXAMPLE 3

Example 3 illustrates the process shown in Figure 2 wherein an anoxic trim zone follows the aerobic zone. As discussed herein before the anoxic zone tends to trim both the nitrogen and phosphate and effectively reduces these nutrient levels to a relatively low level.

Two laboratory units were operated as described in Example 1, except that the duration of the sludge holding was reduced from 1167 to 1047 minutes and the mixed liquor was held and gently stirred in the anoxic zone for a period of 120 minutes. The mixed liquor of the anoxic zone was sampled at various time periods indicated in Table 3. Results of the filtrate analysis from the anoxic zone are shown in Table 3.

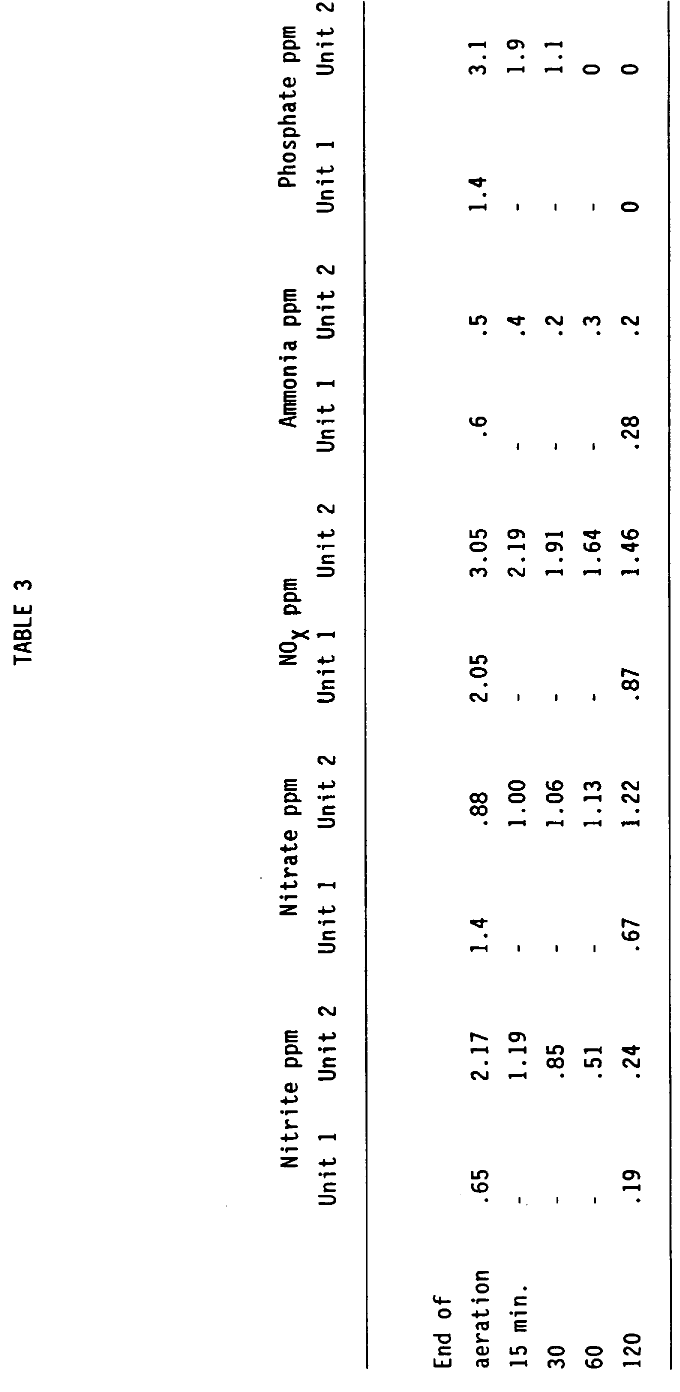

The above data indicates that the total nitrogen is trimmed significantly and the phosphate in the filtrate is reduced to less than the limit of detection. The data suggests that an anoxic retention time of 60 min. will be sufficient to remove virtually all soluble phosphate and to reduce total nitrogen to less than 2.0 ppm.

The process of the present invention has several significant advantages over prior art activated sludge treatment systems. First, because nitrification and denitrification is carried out in a single reactor, the present invention reduces the total pumping capacity required for transporting the wastewater and further, the use of a single reactor results in a tremendous savings in terms of capital outlays needed to construct or modify a treatment plant to preactice the present invention. Further, the present invention has extremely low operating costs since neither chemicals nor denitrification filters are needed to attain extremely low levels of phosphate and nitrogen in the effluent. Further, the process of the present invention produces a compact, dense sludge which settles rapidly in the final clarifier. As a result, fewer operational difficulties, such as sludge loss over the weir, are encountered, and greater operational stability is realized.

The present embodiments are to be considered in all respects as illustrative and not restrictive and all changes coming within the meaning and equivalency range of the appended claims are intended to be embraced therein.

## Claims

1. A process for biologically removing BOD and nitrogen from wastewater in an activated sludge process comprising:
(1) aerating a mixture of wastewater and activated sludge in a first zone;
(2) transferring the mixture thus treated to a separation zone in which activated sludge is separated from the treated water;
(3) withdrawing a recycling part of the separated activated sludge for recycling to the first zone
(4) transferring the recycling part of the separated activated sludge to a sludge holding zone maintained under non-aeration conditions and holding the activated sludge in the sludge holding zone for a period of time sufficient to effect complete denitrification;
**characterized** in
(5) holding the recycling part of the separated activated sludge in the holding zone maintained under anaerobic conditions for a period of at least 4 hours after complete denitrification of the sludge, so as to select microorganisms capable of converting ammonia present in the mixture into NOₓ and concurrently reducing the NOₓ so produced into N₂ and/or N₂O in the first zone;
(6) returning the total amount of activated sludge thus treated to the first zone.

2. A process according to claim 1, **characterized** in holding the separated activated sludge in the holding zone for a period of between 4 and 20 hours after complete denitrification of the sludge.

3. A process according to claim 1 or 2, **characterized** in maintaining the concentration of dissolved oxygen in the first zone between 1 and 3 ppm.

4. A process according to any of the preceding claims,
**characterized** in using a sludge holding zone partitioned into two or more distinct sections.

5. A process according to any of claims 1-4, **characterized** in stirring the sludge in the sludge holding zone.

6. A process according to any of the preceding claims, **characterized** in adjusting the pH of the sludge in the sludge holding zone at a value of between 5 and 8.5.

7. A process according to any of the preceding claims, **characterized** in
(a) mixing wastewater with returned activated sludge in a contact zone maintained under anaerobic conditions; and
(b) transferring the mixture in the anaerobic contact zone to said first zone.

8. A process according to any of the preceding claims, **characterized** in
(a) transferring the mixture in the first zone to an anoxic zone; and
(b) transferring the mixture in the anoxic zone to the separation zone.

9. A process according to claim 7, **characterized** in
(a) transferring the mixture in the anaerobic contact zone to an anoxic zone;
(b) transferring the mixture in the anoxic zone to the first zone; and
(c) recycling part of the mixture in the first zone to the anoxic zone.

10. A process according to any of the preceding claims 1-6, **characterized** in
(a) mixing wastewater with returned active sludge in an anoxic zone;
(b) transferring the mixture from the anoxic zone to the first zone;
(c) recycling part of the mixture in the first zone to the anoxic zone.

## Patentansprüche

1. Verfahren zum biologischen Entfernen von BSB und Stickstoff aus Abwasser in einem Verfahren mit aktiviertem Schlamm, umfassend:
(1) Belüften einer Mischung aus Abwasser und aktiviertem Schlamm in einer ersten Zone;
(2) Übertragen der so behandelten Mischung in eine Trennzone, in der aktivierter Schlamm vom behandelten Wasser abgetrennt wird;
(3) Abziehen eines zurückzuführenden Teiles des abgetrennten, aktivierten Schlammes zum Zurückführen in die erste Zone;
(4) Übertragen des zurückzuführenden Teiles des abgetrennten, aktivierten Schlammes in eine Schlammhaltezone, die unter Bedingungen der Nichtbelüftung gehalten wird, und Halten des aktivierten Schlammes in der Schlammhaltezone für eine ausreichende Zeitdauer, um eine vollständige Entnitrifikation zu bewirken,
gekennzeichnet durch
(5) Halten des zurückzuführenden Teiles des abgetrennten, aktivierten Schlammes in der unter anaeroben Bedingungen gehaltenen Haltezone für eine Dauer von mindestens 4 Stunden nach der vollständigen Entnitrifikation des Schlammes, um Mikroorganismen auszuwählen, die zur Umwandlung von in der Mischung vorhandenem Ammoniak in NOₓ und zum gleichzeitigen Reduzieren des so erzeugten NOₓ in N₂ und/oder N₂O in der ersten Zone in der Lage sind;
(6) Zurückführen der Gesamtmenge des so behandelten, aktivierten Schlammes in die erste Zone.

2. Verfahren nach Anspruch 1, dadurch gekennzeichnet, daß der abgetrennte, aktivierte Schlamm für eine Dauer zwischen 4 und 20 Stunden nach der vollständigen Denitrifikation des Schlammes in der Haltezone gehalten wird.

3. Verfahren nach Anspruch 1 oder 2, dadurch gekennzeichnet, daß die Konzentration von gelöstem Sauerstoff in der ersten Zone zwischen 1 und 3 ppm gehalten wird.

4. Verfahren nach einem der vorhergehenden Ansprüche, dadurch gekennzeichnet, daß eine Schlammhaltezone benutzt wird, die in zwei oder mehr bestimmte Abschnitte unterteilt ist.

5. Verfahren nach einem der Ansprüche 1 bis 4, gekannzeichnet durch das Rühren des Schlammes in der Schlammhaltezone.

6. Verfahren nach einem der vorhergehenden Ansprüche, dadurch gekennzeichnet, daß der pH des Schlammes in der Schlammhaltezone auf einen Wert zwischen 5 und 8,5 eingestellt wird.

7. Verfahren nach einem der vorhergehenden Ansprüche, gekennzeichnet durch
(a) Vermischen von Abwasser mit rückgeführtem, aktiviertem schlamm in einer Kontaktzone, die unter anaeroben Bedingungen gehalten wird und
(b) Übertragen der Mischung aus der anaeroben Kontaktzone in die erste Zone.

8. Verfahren nach einem der vorhergehenden Ansprüche, gekennzeichnet durch
(a) Übertragen der Mischung aus der ersten Zone in eine Zone mit ungenügendem Sauerstoffgehalt und
(b) Übertragen der Mischung aus der Zone mit ungenügendem Sauerstoffgehalt in die Trennzone.

9. Verfahren nach Anspruch 7, gekennzeichnet durch
(a) Übertragen der Mischung aus der anaeroben Kontaktzone in eine Zone mit ungenügendem Sauerstoffgehalt;
(b) Übertragen der Mischung aus der Zone mit ungenügendem Sauerstoffgehalt in die erste Zone und
(c) Zurückführen eines Teiles der Mischung aus der ersten Zone in die Zone mit ungenügendem Sauerstofgehalt.

10. Verfahren nach einem der vorhergehenden Ansprüche 1 bis 6, gekennzeichnet durch
(a) Vermischen von Abwasser mit rückgeführtem, aktiven Schlamm in einer Zone mit ungenügendem Sauerstoffgehalt;
(b) Übertragen der Mischung aus der Zone mit ungenügendem Sauerstoffgehalt in die erste Zone und
(c) Zurückführen eines Teiles der Mischung aus der ersten Zone in die Zone mit ungenügendem Sauerstoffgehalt.

## Revendications

1. Procédé pour éliminer biologiquement la D.B.O. et l'azote d'eaux résiduaires par un procédé de boue activée comprenant :
(1) l'aération d'un mélange d'eaux résiduaires et de boue activée dans une première zone ;
(2) le transfert du mélange ainsi traité vers une zone de séparation dans laquelle la boue activée est séparée de l'eau traitée ;
(3) le retrait d'une partie recyclée de la boue activée séparée pour un recyclage vers la première zone ;
(4) le transfert de la partie recyclée de la boue activée séparée vers une zone de retenue de la boue maintenue dans des conditions de non-aération et la retenue de la boue activée dans une zone de retenue de la boue pendant une période de temps suffisante pour effectuer une dénitrification complète ;
caractérisé en ce qu'il consiste à
(5) retenir la partie recyclée de la boue activée séparée dans la zone de retenue maintenue dans des conditions anaérobies pendant une période d'au moins 4 heures après complète dénitrification de la boue, afin de choisir les microorganismes capables de convertir l'ammoniac présent dans le mélange en NOₓ et simultanément de réduire le NOₓ ainsi produit en N₂ et/ou N₂O dans la première zone ;
(6) renvoyer la quantité totale de boue activée ainsi traitée vers la première zone.

2. Procédé selon la revendication 1, caractérisé en ce qu'il consiste à retenir la boue activée séparée dans la zone de retenue pendant une période comprise entre 4 et 20 heures après dénitrification complète de la boue.

3. Procédé selon la revendication 1 ou 2, caractérisé en ce qu'il consiste à maintenir la concentration d'oxygène dissous dans la première zone entre 1 et 3 ppm.

4. Procédé selon l'une quelconque des revendications précédentes, caractérisé en ce qu'il consiste à utiliser une zone de retenue de la boue cloisonnée en deux ou plusieurs sections distinctes.

5. Procédé selon l'une quelconque des revendications 1 à 4, caractérisé en ce qu'il consiste à remuer la boue dans la zone de retenue de la boue.

6. Procédé selon l'une quelconque des revendications précédentes, caractérisé en ce qu'il consiste à ajuster le pH de la boue dans la zone de retenue de la boue à une valeur comprise entre 5 et 8,5.

7. Procédé selon l'une quelconque des revendications précédentes, caractérisé par le fait qu'il consiste à :
(a) mélanger les eaux résiduaires avec la boue activée recyclée dans une zone de contact maintenue dans des conditions anaérobies ; et
(b) transférer le mélange dans la zone de contact anaérobie vers ladite première zone.

8. Procédé selon l'une quelconque des revendications précédentes, caractérisé en ce qu'il consiste à :
(a) transférer le mélange dans la première zone vers une zone anoxique ; et
(b) transférer le mélange dans la zone anoxique vers la zone de séparation.

9. Procédé selon la revendication 7, caractérisé en ce qu'il consiste à :
(a) transférer le mélange dans la zone de contact anaérobie vers une zone anoxique ;
(b) transférer le mélange dans la zone anoxique vers la première zone ; et
(c) recycler une partie du mélange dans la première zone vers la zone anoxique.

10. Procédé selon l'une quelconque des revendications précédentes 1 à 6, caractérisé en ce qu'il consiste à :
(a) mélanger les eaux résiduaires avec la boue activée recyclée dans une zone anoxique ;
(b) transférer le mélange de la zone anoxique vers la première zone ;
(c) recycler une part du mélange dans la première zone vers la zone anoxique.
